# EUROPEAN PATENT APPLICATION

(11) **EP 4 750 079 A1**
(43) Date of publication of application: **27.05.2026**
(21) Application number: 24853777.1
(22) Date of filing: 13.08.2024
(51) Int. Cl.: H04R 1/02, G02C 11/00

(54) **AUDIO SYSTEM AND SMART GLASSES**

(30) Priority: 14.08.2023 CN 202311021372
(71) Applicant: Beijing Unicorn Technology Co., Ltd., Beijing 100081 (CN)
(72) Inventor: SHAN, Lianwen, Beijing 100098 (CN); XIAO, Bing, Beijing 100098 (CN); LIAN, Weisheng, Beijing 100098 (CN)
(74) Representative: Grünecker Patent- und Rechtsanwälte PartG mbB
(86) International application number: PCT/CN2024/111885
(87) International publication number: WO 2025/036369

(57) **Abstract**

Embodiments of the present disclosure disclose an audio system and smart glasses. The audio system includes a carrier and a speaker unit. The carrier has a first side wall and a second side wall. An acoustic vent port is formed in the first side wall, and an acoustic output port is formed in the second side wall. The speaker unit is arranged in the carrier. The carrier and the speaker unit cooperate to form a front chamber and a back chamber. The acoustic vent port is in communication with the back chamber, and the acoustic output port is in communication with the front chamber. An included angle is formed between the speaker unit and the first side wall. The first end of the speaker unit is close to the first side wall, and the second end of the speaker is far from the first side wall. The smart glasses include a frame, temples, and at least one audio system. The audio system is arranged in a temple.

## Description

The present disclosure claims priority to Chinese Patent Application No. CN202311021372.8, filed with the China National Intellectual Property Administration on August 14, 2023, and entitled "Audio System and Smart Glasses", which is incorporated herein by reference in its entirety.

### TECHNICAL FIELD

The present disclosure relates to the technical field of electronic devices, and in particular to an audio system and smart glasses.

### BACKGROUND

As a medium for human-machine interaction, sound is typically integrated within electronic devices. As electronic devices take increasingly diverse forms and become smaller in volume, it is often necessary to constrain the volume of an audio system. For example, for the sake of wearing comfort and aesthetics of smart glasses, temples tend to adopt a narrow-edge design, which limits the volume of the audio system. Therefore, how to improve the sound performance of a small-volume audio system has become a technical problem that urgently needs to be solved.

### SUMMARY

Embodiments of the present disclosure provide an audio system and smart glasses.

In one aspect, the present disclosure provides an audio system. The audio system includes a carrier and a speaker unit, wherein the carrier has a first side wall and a second side wall, with an acoustic vent port formed in the first side wall, and an acoustic output port formed in the second side wall, the speaker unit is arranged in the carrier, the carrier and the speaker unit cooperate to form a front chamber and a back chamber, the acoustic vent port is in communication with the back chamber, and the acoustic output port is in communication with the front chamber, an included angle is formed between the speaker unit and the first side wall, and the first end of the speaker unit is close to the first side wall, and the second end of the speaker is away from the first side wall.

In another aspect, the present disclosure provides smart glasses. The smart glasses include a frame, temples, and at least one audio system described above, wherein the audio system is arranged in a temple.

The technical solution of the present disclosure is further described in detail below in conjunction with the accompanying drawings and embodiments.

### BRIEF DESCRIPTION OF THE DRAWINGS

The drawings constituting a part of the specification describe embodiments of the present disclosure, and together with the description, serve to explain the principle of the present disclosure.

With reference to the accompanying drawings, the present disclosure can be understood more clearly according to the following detailed description, in which:
Fig. 1 shows a perspective structural diagram of an audio system according to an embodiment of the present disclosure;
Fig. 2 shows an exploded view of an audio system according to an embodiment of the present disclosure;
Fig. 3 shows an internal structural diagram of an audio system according to an embodiment of the present disclosure;
Fig. 4 shows a cross-sectional view of an audio system according to an embodiment of the present disclosure;
Fig. 5 shows an internal structural diagram of an audio system according to an embodiment of the present disclosure with part of a carrier removed;
Fig. 6 shows a cross-sectional view along a direction A-A in Fig. 5;
Fig. 7 shows a partial structural view of a first structure of an audio system according to an embodiment of the present disclosure;
Fig. 8 shows a partial structural view of a second structure of an audio system according to an embodiment of the present disclosure;
Fig. 9 shows a schematic structural diagram of a carrier of an audio system according to an embodiment of the present disclosure provided with inclined steps;
Fig. 10 shows a view of Fig. 9 at another viewing angle;
Fig. 11 shows a cross-sectional view of a structure of an audio system according to an embodiment of the present disclosure in which a speaker unit is placed obliquely in a direction perpendicular to the plane of a carrier; and
Fig. 12 shows a side view of smart glasses according to an embodiment of the present disclosure.

Reference signs: 1: carrier; 1a: partition rib; 11: first housing; 111: first side wall; 111a: acoustic vent port; 112: second side wall; 1121: convex arc-shaped segment; 1122: acoustic output port; 113: third side wall; 114: enclosure structure; 115: inclined step; 116: non-inclined step; 12: second housing; 13: front chamber; 14: back chamber; 15: isolation chamber; 2: speaker unit; 3: smart glasses; 31: frame; 32: temple; 321: position where audio system is arranged; 322: inclined segment.

It is to be noted that these drawings and text descriptions are not intended to limit the scope of conception of the present invention in any way, but to explain the concepts of the present invention for those skilled in the art by referring to specific embodiments.

### DETAILED DESCRIPTION

To make the objects, technical solutions and advantages of embodiments of the present invention clearer, the technical solutions in the embodiments will be described clearly and completely with reference to the drawings in the embodiments of the present invention. The following embodiments are used for illustrating the present invention, but not limiting the scope of the present invention.

In description of the present invention, it should be noted that orientation or location relations denoted by the terms "upper", "lower", "inner", "outer", etc. are orientation or location relations based on illustration in the drawings, are only intended to facilitate describing the present invention and simplify description, instead of indicating or implying the denoted apparatuses or elements must have specific orientations and are constructed and operated in specific orientations, and thus they should not be construed as limiting the present invention.

In description of the present invention, it should be noted that unless otherwise explicitly specified and defined, the terms "mount" and "connect" should be construed broadly. For example, such terms may denote fixed connection, or detachable connection, or integrated connection; may denote mechanical connection, or electrical connection; may denote direct connection, or connection via an intermediate medium. For those of ordinary skill in the art, specific meanings of the above-mentioned terms in the present invention may be construed according to specific conditions.

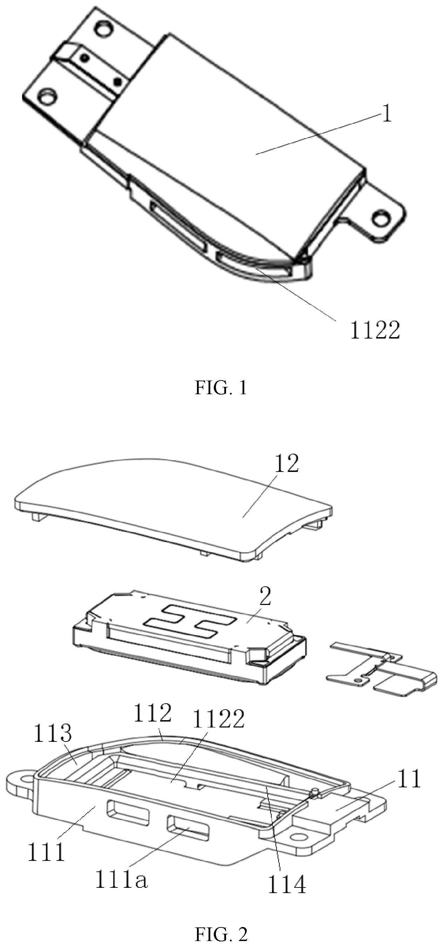

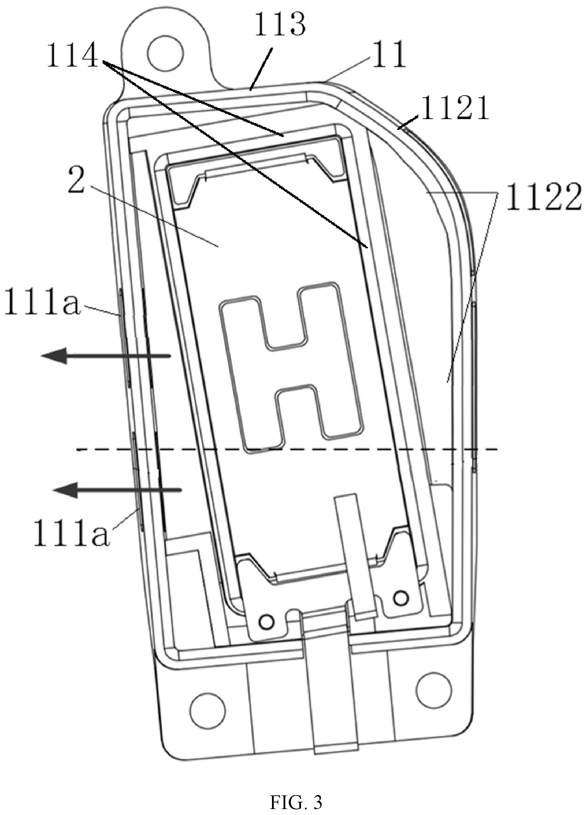

Fig. 1 shows an external structure of the audio system 100 according to the present disclosure. Fig. 2 shows an exploded view of the audio system 100 according to the present disclosure. Fig. 3 shows an internal structure of the audio system 100 according to the present disclosure. The audio system 100 may include a carrier 1 and a speaker unit 2.

In some optional embodiments, the carrier of the audio system includes a first side wall 111 and a second side wall 112 that are opposite each other. The speaker unit 2 may be arranged obliquely in the carrier 1, an included angle is formed between the speaker unit and the first side wall 111, and between the speaker unit and the second side wall 112, as shown in Fig. 3.

In some optional embodiments, the above-described carrier 1 includes a plurality of side walls, a chamber is formed by the side walls, and the speaker unit 2 is arranged in the chamber formed by the carrier 1. A front chamber and a back chamber that do not communicate with each other are formed between the speaker unit 2 and the side walls of the carrier 1. The front chamber is in communication with the outside through a provided acoustic output port, and the back chamber is in communication with the outside through a provided acoustic vent port. The speaker unit 2 is arranged obliquely relative to side walls/a side wall where the acoustic output port and/or the acoustic vent port is located.

In some optional embodiments, the above-described carrier 1 may include a first side wall 111 with a planar surface and a second side wall 112 with a curved surface. The speaker unit 2 may be arranged obliquely relative to the first side wall 111, as shown in Fig. 3.

The carrier 1 has a first side wall 111 and a second side wall 112. The first side wall 111 is provided with an acoustic vent port 111a, and the second side wall 112 is provided with an acoustic output port 1122. The speaker unit 2 may be arranged in the carrier 1. The carrier 1 and the speaker unit 2 cooperate to form a front chamber 13 and a back chamber 14. The acoustic vent port 111a may be in communication with the back chamber 14, and the acoustic output port 1122 may be in communication with the front chamber 13. An included angle is formed between the speaker unit 2 and the first side wall 111. The first end of the speaker unit 2 is close to the first side wall 111, and the second end of the speaker is away from the first side wall 111. Therefore, the speaker unit 12 is placed obliquely on the plane of the carrier 1, and the plane of the carrier 1 is perpendicular to the thickness direction of the speaker unit 2.

It should be noted that embodiments of the present disclosure do not limit the first end and the second end of the speaker unit 2. The first end and the second end are respectively located on two opposite sides of the speaker unit 2. In the case where the speaker unit 2 is rectangular, the first end and the second end may be respectively located at two opposite ends of the speaker unit 2 along the length direction thereof, or the first end and the second end may also be respectively located at two opposite ends of the speaker unit 2 along a width direction thereof. The first end and the second end of the speaker unit 2 are mainly used to limit the speaker unit 2 to be placed obliquely in the carrier 1. Optionally, the first side wall 111 may also have a first end and a second end. The first end of the first side wall 111 is close to the first end of the speaker unit 2, and the second end of the first side wall 111 is close to the second end of the speaker unit 2. A distance from the above-mentioned acoustic vent port 111a to the second end of the first side wall 111 is greater than a distance from the acoustic vent port 111a to the first end of the first side wall 111.

It may be understood that the above-described first side wall 111 and second side wall 112 may be two opposite side walls, as shown in Fig. 2. Alternatively, the above-described first side wall 111 and second side wall 112 may be two adjacent side walls, without being uniquely limited thereto.

Optionally, the acoustic vent port is provided along the first side wall, and the acoustic output port is provided along the second side wall.

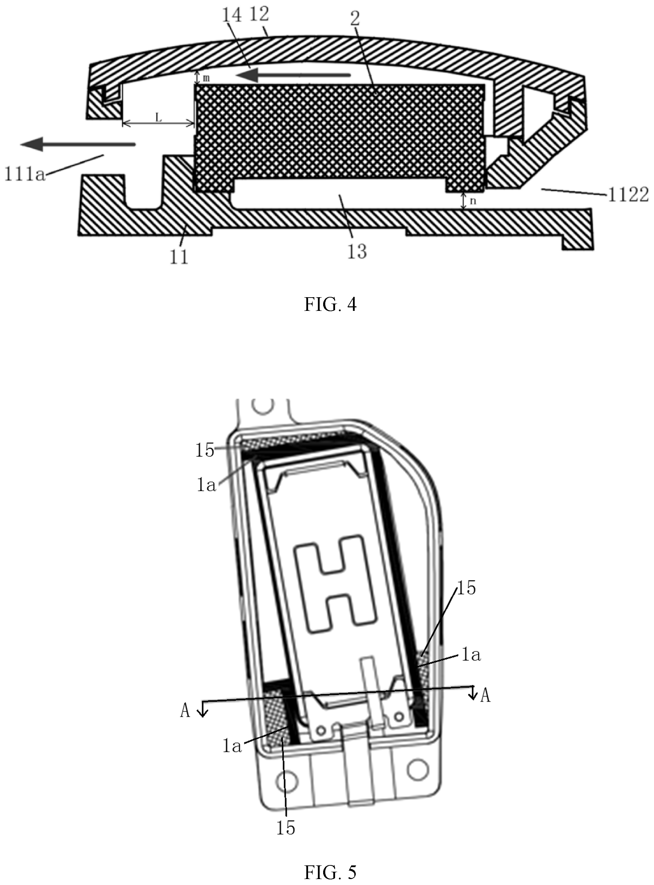

Fig. 4 shows a cross-sectional view of the audio system 100, in which a sign L indicates the distance between the speaker unit 2 and the acoustic vent port 111a. As can be seen from Fig. 4, in embodiments of the present application, by obliquely arranging the speaker unit 2 relative to the carrier 1, the distance L between the speaker unit 2 and the acoustic vent port 111a can be larger, thereby allowing an airflow through the acoustic vent port 111a to be smoother.

As shown in an internal structural diagram of the audio system 100 in Fig. 3, the carrier 1 may be an elongated box (for example, a length-to-width ratio of the chamber of the carrier 1 is between 1.4 and 2.5), and the speaker unit 2 is placed obliquely in the carrier 1. When the speaker unit 2 vibrates to produce sound, an airflow generated in the back chamber 14 may flow in a direction indicated by arrows. Being placed obliquely as shown in Fig. 3, the speaker unit 2 may be at a greater distance from the acoustic vent port 111a, especially at a greater distance from the acoustic vent port 111a that is close to the second end of the speaker 2. For example, the distance may be greater than 1.4 mm. Therefore, the airflow through the acoustic vent port 111a of the back chamber 14 can flow more smoothly. The oblique placement of the speaker unit 2 in the plane of the carrier 1 can ensure that under a width-constrained condition, the acoustic vent port 111a in the carrier 1 has a sufficient airflow passage, thereby ensuring a smoother airflow in the back chamber 14, eliminating airflow noise, and reducing total harmonic distortion (THD).

It may be understood that the overall volume of the audio system in the present disclosure is relatively small. Considering factors such as sound performance and cost, the volume of the speaker unit 2 is typically not too small. To ensure the sound performance of the audio system, its volume is typically matched with that of the chamber of the carrier 1. For example, the length and width of the speaker unit 2 are slightly smaller than the length and width of the chamber of the carrier 1. In this case, if the distance between the speaker unit 2 and a side wall of the carrier 1 is too close, sound performance is liable to be affected. In the solution of the present disclosure, the distance between the speaker unit 2 and the acoustic vent port 111a can be increased to ensure a smoother airflow in the back chamber 14.

Optionally, the above-described audio system 100 may be mounted in a structure of an electronic device, such as a temple of smart glasses. When the audio system 100 is arranged in a narrow structure of an electronic device such as a temple of smart glasses, the carrier 1 often needs to have an elongated design. In this case, obliquely placing the speaker unit 2 allows for a greater distance between the speaker unit and the acoustic vent port 111a. It may be understood that in the case where the carrier 1 is not of an elongated design, the speaker unit 2 may also be arranged obliquely, thereby further increasing the distance between the speaker unit and the acoustic vent port 111a.

In some optional embodiments, the above-described carrier 1 may also be a part of a housing of an electronic device. As an example, the above-described carrier 1 may be a temple of smart glasses, or may be an earphone housing or a housing of another electronic device having a sound-emitting function. Taking an example in which the carrier 1 is a temple of smart glasses, the speaker unit 2 may be provided in the temple, and a temple housing may have a first side wall provided with an acoustic vent port and a second side wall provided with an acoustic output port.

In some optional embodiments, the above-described audio system 100 may control the front chamber 13 and the back chamber 14 in various ways to radiate sound waves to the outside in a manner equivalent to an acoustic dipole. Specifically, the front chamber 13 and the back chamber 14 respectively radiate a first sound wave and a second sound wave to the outside through the acoustic output port 1122 and the acoustic vent port 111a, so that in a near field close to the acoustic output port 1122 or close to the acoustic vent port 111a, the first sound wave or the second sound wave can be heard by a human ear. The second sound wave is out of phase with the first sound wave (for example, by 180 degrees), such that the energy of the first sound wave and the energy of the second sound wave can cancel out in a far field, thereby reducing sound leakage of the audio system, and protecting the privacy. The audio system may implement an acoustic dipole in various ways. As an example, the audio system may be provided with two speaker units, and the speaker units may cooperate with the carrier to form a front chamber and a back chamber, respectively. Amplitudes of the sound waves of the speaker units are controlled to be substantially the same, and phases of the sound waves are controlled to be substantially opposite, thereby enabling the front chamber and the back chamber to radiate sound waves in a manner equivalent to an acoustic dipole.

In some embodiments of the present disclosure, as shown in Figs. 2 and 3, the first side wall 111 and the second side wall 112 are spaced apart and arranged opposite each other. In the case where the acoustic output port 1122 and the acoustic vent port 111a are respectively provided in two opposite side walls, phases of sound waves radiated from the acoustic output port 1122 and the acoustic vent port 111a may be substantially opposite, thereby achieving privacy protection through an acoustic dipole. For example, the speaker unit 2 is placed inside the carrier 1, with a front chamber formed between the speaker unit and one side of the carrier 1, and a back chamber formed between the speaker unit and another side of the carrier. The front chamber may be in communication with outside air through the acoustic output port, and the back chamber may be in communication with the outside air through the air vent hole. The sound wave from the back chamber and the sound wave from the front chamber are superimposed externally, and cancel out upon superimposition due to opposite phases. As a result, non-users (e.g., non-users of an electronic device) cannot clearly hear sound from the acoustic output port, thereby achieving the purpose of preventing privacy leakage. As an example, the audio system 100 may be provided in a temple of the smart glasses, and when the smart glasses are worn on the head of a user, the temple is supported on an ear of the user, such that one of the acoustic output port 1122 and the acoustic vent port 111a is close to an ear canal of the user, and the other is far from the ear canal of the user. One of the first sound wave emitted from the front chamber and the second sound wave emitted from the back chamber may be heard by the user, and the other may be radiated to the outside. The second sound wave and the first sound wave are superimposed at a position far from the user's ear. Since the first sound wave and the second sound wave are out of phase (e.g., completely opposite phases), the waves cancel out upon superimposition, such that people around the user of the smart glasses cannot hear the sound emitted by the smart glasses, thereby protecting the privacy of the user.

In some optional embodiments, the first side wall 111 may be provided with one or more acoustic vent ports 111a. The acoustic vent ports 111a are spaced apart sequentially along the length direction of the first side wall 111. The distance between at least one acoustic vent port 111a and the speaker unit 2 is not less than 1.4 mm. In the case where the first side wall 111 is provided with at least two acoustic vent ports 111a, the distance between an acoustic vent port 111a close to the second end of the speaker unit 2 and the speaker unit 2 is greater than 1.4 mm. In the case where the first side wall 111 is provided with one acoustic vent port 111a, the distance between the acoustic vent port 111a and the speaker unit 2 may be greater than 1.4 mm. The larger distance between the acoustic vent port 111a and the speaker unit 2 may enable an airflow through the acoustic vent port 111a of the back chamber to flow more smoothly. This can further ensure that under a width-constrained condition, the acoustic vent port 111a has a sufficient airflow passage, thereby ensuring a smoother airflow in the back chamber, eliminating airflow noise, and reducing total harmonic distortion (THD).

In some optional embodiments, referring to Fig. 3, in a state where the speaker unit 2 is mounted in the carrier 1, the position of the air vent hole of the speaker unit 2 faces that of an acoustic vent port 111a, thereby allowing an airflow discharged from the air vent hole to be discharged more smoothly via the acoustic vent port through a smooth air flow path, such that the resistance to the airflow is further reduced, enabling the airflow in the back chamber 14 to be smoother, and eliminating airflow noise. In the solution disclosed in this embodiment, the distance between the acoustic vent port 111a and the speaker unit 2 may be understood as the distance between the acoustic vent port 111a and the air vent hole on the speaker unit 2 in a direction perpendicular to the first side wall 111. The air vent hole and the acoustic vent port 111a being arranged to face each other can make the distance between the air vent hole and the acoustic vent port sufficiently large, so that the air vent hole in the back chamber has a sufficient airflow passage, thereby ensuring a smoother airflow in the back chamber, and eliminating airflow noise.

As shown in the internal structural diagram of the audio system in Fig. 3, an "H"-shaped part of the speaker unit 2 may be the air vent hole of the speaker unit 2. It is substantially aligned with the acoustic vent port 111a in the first side wall 111, and the position of the speaker unit 2 in the length direction of the first side wall 111 may be defined there. On this basis, the distance between the acoustic vent port 111a and the speaker unit 2 is defined. The larger the distance is, the smoother the airflow through the acoustic vent port 111a is.

In some optional embodiments, for the speaker unit 2, an edge of a surface where the air vent hole is located that is close to the acoustic vent port 111a is a first edge. The distance between the first edge and an inner upper surface of the carrier 1 (not an inner surface of a side wall) is m. In this embodiment, m may be greater than or equal to 0.5 mm. It may be understood that the above-described first edge may also be described as an edge of the speaker unit 2 that is close to the acoustic vent port and extends in the length direction of the carrier 1, and the surface where the first edge of the speaker unit 2 is located may cooperate with the carrier 1 to form the back acoustic chamber 14. As can be seen from an airflow direction of the air vent hole shown by arrows in Fig. 4, the size defined by m is at a position of the smallest size in the airflow direction. The size at this position is greater than or equal to 0.5 mm, which can ensure a smoother airflow in the back chamber. It may be understood that the oblique placement of the above-described speaker unit 2 allows the position defined by m to be farther from the acoustic vent port, the distance between the inner upper surface of the carrier 1 and the first edge to be greater, and the airflow in the back chamber to be smoother.

In some optional embodiments, as shown in Fig. 4, the distance between a second edge of the above-described speaker unit 2 and the inner lower surface of the carrier 1 (not an inner surface of a side wall) may be n. In this embodiment, n may be greater than or equal to 0.4 mm. The above-mentioned second edge may be an edge of the speaker unit 2 that is close to the acoustic output port and extends in the length direction of the carrier 1. A surface where the second edge of the speaker unit 2 is located may cooperate with the carrier 1 to form the front acoustic chamber 13. As can be seen from the front acoustic chamber 13 and the acoustic output port in Fig. 4, the size defined by n is at a position of the smallest size in a direction from the front chamber to the acoustic output port. The size at this position is greater than or equal to 0.4 mm, which can ensure a smoother airflow in the front chamber.

In some optional embodiments, the distance between the first end of the speaker unit 2 and the first side wall 111 may be a first distance, and the distance between the second end of the speaker unit and the first side wall may be a second distance, and the second distance may be 3 to 5 times the first distance. In the solution disclosed in this embodiment, the degree of inclination of the speaker unit 2 relative to the first side wall can be controlled to be sufficiently large, so that the acoustic vent port of the back chamber has a sufficient airflow passage, thereby ensuring a smoother airflow in the back chamber, and eliminating airflow noise.

In some optional embodiments, the included angle α is formed between the side wall of the speaker unit 2 close to the acoustic vent port and the first side wall 111, and 3° < α < 10°. In the solution disclosed in this embodiment, the degree of inclination of the speaker unit 2 relative to the first side wall can be controlled to be sufficiently large, so that the acoustic vent port of the back chamber has a sufficient airflow passage, thereby ensuring a smoother airflow in the back chamber, and eliminating airflow noise.

In some optional embodiments, an inner length of the first side wall is 2 to 3 times the effective inner length of the acoustic vent port along the direction of the first side wall. In the solution disclosed in this embodiment, the acoustic vent port extends a long distance along the first side wall, which facilitates a smooth airflow in the back chamber, so that the airflow can be discharged from the back chamber more smoothly.

In some optional embodiments, a length of the speaker unit 2 may be 1.5 to 2.5 times the effective inner length of the acoustic vent port 111a along the direction of the first side wall 111. The extension length of acoustic vent port 111a relative to the length of the speaker unit 2 is moderate, so that the airflow in the back chamber is smooth, and the airflow can be discharged from the back chamber smoothly.

In some optional embodiments, the audio system may be provided with at least two acoustic vent ports 111a. The acoustic vent ports 111a are provided in the first side wall 111. The acoustic vent ports 111a are spaced apart sequentially along the length direction of the first side wall 111. The effective inner length of the acoustic vent port along the direction of the first side wall defined above may be understood as a sum of the effective inner lengths of the acoustic vent ports along the direction of the first side wall. Regardless of the number of acoustic vent ports 111a provided in the audio system, the sum of the effective inner lengths of the acoustic vent ports 111a along the direction of the first side wall 111 needs to meet a specified requirement. Fig. 3 shows an internal structural diagram of the audio system, and Fig. 4 shows a cross-sectional view of the audio system. The carrier 1 of the audio system may include two separate structures: a first housing 11 and a second housing 12. The first housing 11 may have a first side wall 111 and a second side wall 112. The first housing 11 and the second housing 12 may be snap-fitted with each other, such that a front chamber 13 is formed between the speaker unit 2 and the first housing 11, and a back chamber 14 is formed between the second housing 12, the first housing 11, and the speaker unit 2. The separation structures of the carrier 1 can reduce the difficulty of installing the audio system.

As an example, the carrier 1 may be a temple of smart glasses, the first housing may be an inner shell of the temple, and the second housing may be an outer shell of the temple. Alternatively, the carrier 1 may be a box provided on a temple of smart glasses. The first housing of the carrier 1 is arranged close to an inner shell of the temple, and the second housing is arranged close to an outer shell of the temple. In a state where the smart glasses are worn, the inner shell faces a wearer's skin, and the outer shell faces away from the wearer's skin.

The carrier 1 is typically elongated, with the acoustic output port and the acoustic vent port located on end faces of two sides of the carrier 1 along a width direction thereof. The carrier 1 may be a flat strip-shaped structure. The carrier 1 may be mounted in a specific structure of an electronic device, and the structure may be provided with a first avoidance hole and a second avoidance hole. For example, the specific structure for mounting the carrier may be a temple of smart glasses, with the first avoidance hole and the second avoidance hole provided on end faces of two sides of the temple along a width direction thereof. The first avoidance hole may be in communication with the acoustic vent port 111a, and the second avoidance hole may be in communication with the acoustic output port 1122. The acoustic output port and the acoustic vent port are located at different distances from the wearer's ear canal. The acoustic output port 1122 is typically closer to the user's ear canal.

Optionally, as shown in Fig. 3, the second side wall 112 may have a convex arc-shaped segment 1121, and the first housing 11 further has a third side wall 113 that connects the first side wall 111 and the convex arc-shaped segment 1121. A corner portion is formed between the third side wall 113 and the convex arc-shaped segment 1121. A corner of the speaker unit 2 may be oriented toward the corner portion.

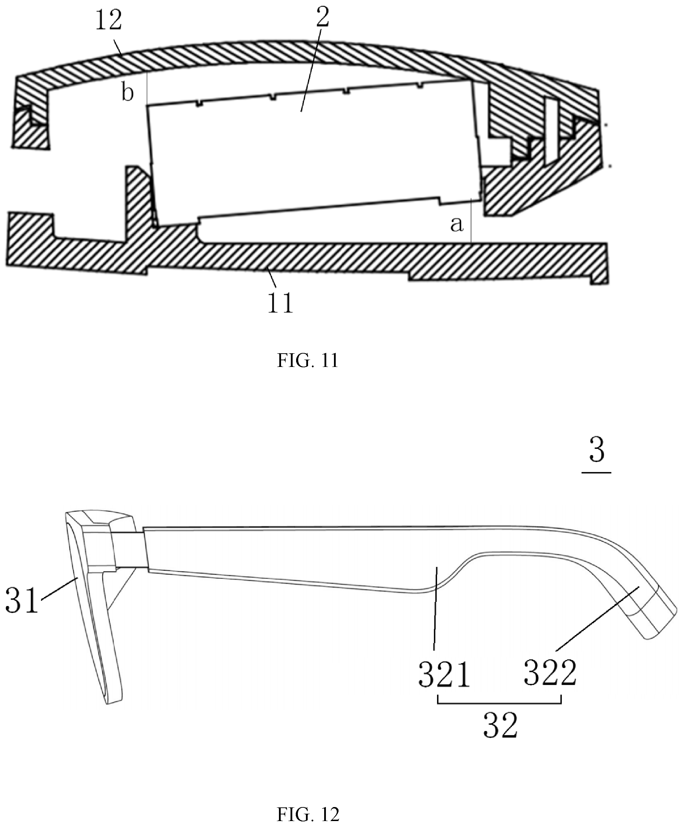

As an example, a location on the temple where the speaker unit 2 is provided is a position close to the ear canal when the user wears the smart glasses. As shown in Fig. 12, the speaker unit 2 may be provided at a location indicated by the sign 321. To facilitate wearing, make the acoustic output port 1122 closer to the ear, and meet the requirement of wearing comfort, an area near the acoustic output port 1122 may be designed to be convex arc-shaped. Therefore, the carrier 1 needs to be provided with a convex arc-shaped segment 1121. A tail portion of the temple 32 has an inclined segment 322 that extends downward. When the user wears the smart glasses 3, the convex arc-shaped segment 1121 is located in front of the user's ear, and the inclined segment 322 is located behind the user's ear. The convex arc-shaped segment 1121 and the inclined segment 322 cooperate to achieve the functions of avoiding the user's ear and being positionally limited through cooperation with the user's ear.

Optionally, as shown in Figs. 2 and 3, the first housing 11 may further include a fourth side wall that connects the first side wall 111 and the second side wall 112. The fourth side wall is arranged opposite the third side wall 113. One corner of the speaker unit 2 abuts against the convex arc-shaped segment 1121, and at least one of two corners of the speaker unit 2 that are far from the convex arc-shaped segment 1121 abuts against any one of the second side wall 112 and the fourth side wall, thereby allowing the speaker unit 2 to be arranged obliquely to a maximum extent.

In embodiments of the present application, in order to maximize the oblique disposition of the speaker unit 2, when one corner of the speaker unit 2 abuts against the convex arc-shaped segment 1121, the speaker unit 2 is rotated around the vertex as a circle center, and when at least one of the two corners of the speaker unit 2 that are far from the convex arc-shaped segment 1121 comes into contact with any one of the second side wall and the fourth side wall, the speaker unit 2 reaches a maximum inclination angle. At this point, the inclination angle of the speaker unit 2 is maximum, or the distance between the air vent hole and acoustic vent port 111a is maximum.

In some embodiments of the present disclosure, as shown in Fig. 2, an enclosure structure 114 may also be provided in the first housing 11, and the speaker unit 2 may be embedded in and fixed on the inner side of the enclosure structure 114. A peripheral end face of the speaker unit 2 is closely fitted against an inner surface of the enclosure structure 114, and is positionally limited by the enclosure structure 114, preventing the speaker unit 2 from shifting or wobbling, so that the assembly structure of the speaker unit 2 is stable and highly reliable.

In some embodiments of the present disclosure, as shown in Figs. 4, 5, and 6, the speaker unit 2 divides the internal chamber of the carrier into a main chamber and the front chamber 13. A partition rib 1a is arranged in the carrier 1, and the partition rib 1a may divide the main chamber into the back chamber 14 and an isolation chamber 15.

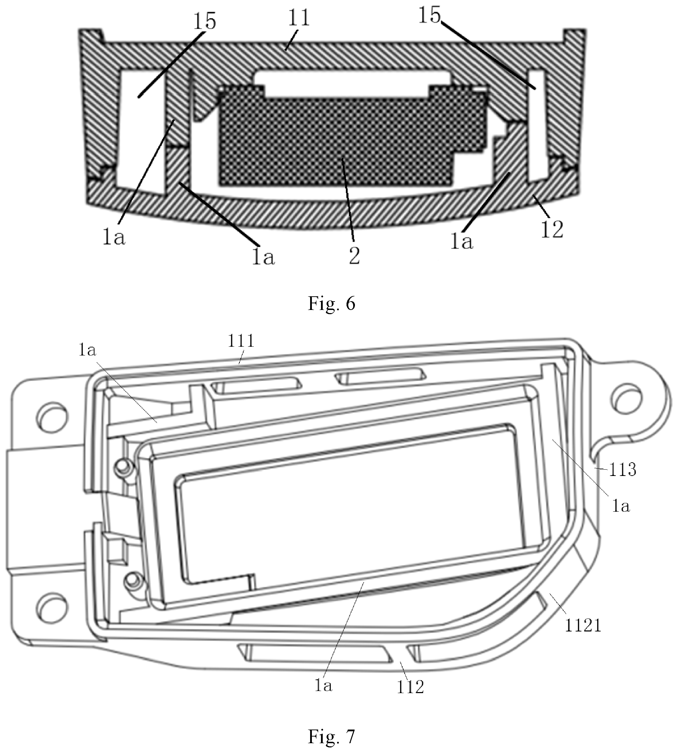

In an electronic device, in order to improve the sound performance of the audio system, it is usually necessary to make the volume of the front chamber and the volume of the back chamber as equal as possible. In addition, effective areas of the acoustic output port 1122 and the acoustic vent port 111a are also made as close as possible to each other, so as to significantly improve the sound field isolation. In the actual design of the carrier 1, the volume of the back chamber 14 is often greater than the volume of front chamber 13. In the above-described embodiment, a portion of space may be separated by the partition rib 1a to form the back chamber 14, thereby reducing the volume of the back chamber 14 and making the volume of the back chamber 14 as close as possible to that of the front chamber 13. The partition rib 1a, which may be as shown in Fig. 6, may divide the main chamber into the back chamber 14 and the isolation chamber 15 isolated from the back chamber.

Taking an example in which the carrier 1 is provided in a temple of smart glasses, when a width of the temple increases, a distance from the speaker unit 2 to the position of the effective acoustic output port 1122 is controlled to be substantially unchanged, and a distance from the speaker unit 2 to the inner shell of the temple is controlled to be unchanged, such that the volume of the front chamber 13 can be substantially unchanged. Then, the volume of the back chamber 14 is reduced by providing the above-mentioned partition rib, such that the volumes of the front chamber 13 and the back chamber 14 and a volume ratio thereof can be as unchanged as possible. In the solution disclosed in this embodiment, the same set of audio algorithms can be used for temples of different sizes, thereby reducing the cost of the audio system.

In some optional embodiments of the present disclosure, as shown in Figs. 5 and 7, the audio system may include at least a first partition rib. The first partition rib may be located between the third side wall 113 and the speaker unit 2. The speaker unit 2 is arranged along the first partition rib, and the speaker unit 2 is close to the first partition rib. In this embodiment, between the speaker unit 2 and the third side wall 113 are the first partition rib and the isolation chamber 15 isolated by the first partition rib. That is, along the length of the carrier 1, the speaker unit 2, the first partition rib, and the third side wall 113 may be arranged sequentially.

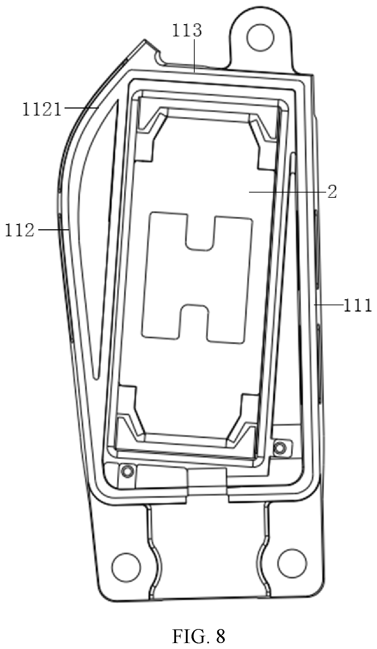

In some optional embodiments of the present disclosure, as shown in Fig. 8, the carrier 1 may also not be provided with the first partition rib. In this case, the speaker unit 2 is arranged adjacent to the third side wall 113, and the speaker unit 2 is close to the third side wall 113. In this case, neither the partition rib nor the isolation chamber is between the speaker unit 2 and the third side wall 113.

Without affecting the front chamber 13 and the back chamber 14 of the audio system, the isolation chamber 15 isolated by the first partition rib in the audio system as shown in Fig. 5 or Fig. 7 may be cut. In a cut acoustic chamber structure, the first partition rib may serve as the third side wall, which can reduce the space occupied by the audio system in the electronic device and facilitate the design of other structures in the electronic device. The isolation chamber 15 as shown in Fig. 5 may be cut to obtain the structure as shown in Fig. 8. For example, the audio system is provided in a temple of smart glasses, and after the isolation chamber 15 is cut, the space for the audio system in the temple can be reduced, leaving more space for other structures of the smart glasses.

In some embodiments of the present disclosure, as shown in Fig. 6, the isolation chamber 15 extends along the thickness direction of the carrier 1, and the extension length of the isolation chamber 15 is greater than the thickness of the speaker unit 2.

A characteristic of the isolation chamber 15 is that a distance from the inner side of the first housing 11 to the inner side of the second housing 12 is relatively large, and greater than the size of the speaker unit 2 in the thickness direction of the carrier 1. In the case where the area on the carrier plane is small, this can minimize the volume of the back chamber 14, thereby making the volumes of the front chamber 13 and the back chamber 14 substantially equal. Providing the isolation space in the carrier 1 can also further reduce the weight of the temple, and the process is easy to implement.

In some embodiments of the present disclosure, as shown in Fig. 7, the carrier 1 may have a first housing 11 and a second housing 12. At least one of the first housing 11 and the second housing 12 is provided with side walls. The side walls include a first side wall 111 and a second side wall 112. The two ends of the partition rib 1a are respectively connected to the side walls. The isolation chamber 15 is formed by enclosure of the partition rib 1a and the side walls.

The partition rib 1a may be configured as a closed ring. The partition rib 1a may also be connected to the side walls at two ends. The partition rib 1a and the side walls enclose the closed isolation chamber. By respectively connecting the two ends of the partition rib 1a to the side walls, the structure can be simplified, and the structural strength of the side walls is increased.

In some optional embodiments, in a cross section in the thickness direction of the carrier 1, none of extension directions of outer edges of the speaker unit 2 is parallel to a side wall of the carrier 1, as shown in Fig. 11. The above-described carrier 1 has a first side wall 111. The first side wall 111 is provided with an acoustic vent port 111a. The cross section of the carrier 1 includes a cross section of the first side wall 111.

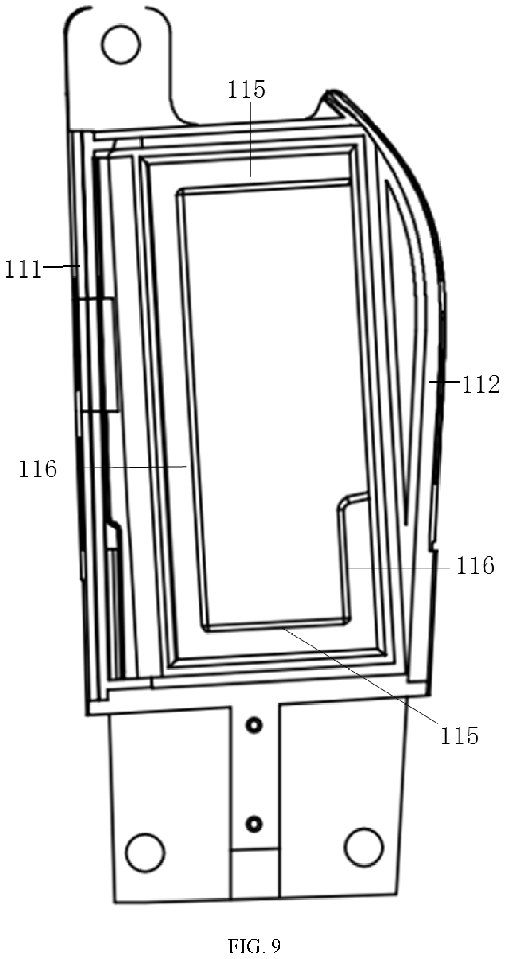

Figs. 9, 10, and 11 illustrate some optional implementations of the audio system. The carrier 1 may sequentially include a first housing 11 and a second housing 12 along the thickness direction thereof. The first housing 11 has a first side wall 111 and a second side wall 112. The front chamber 13 is formed between the speaker unit 2 and the first housing 11, and a part of the back chamber 14 is formed between the second housing 12 and the speaker unit 2. A side of the speaker unit 2 close to the acoustic vent port 111a is inclined away from the second housing 12, and a side of the speaker unit 2 close to the acoustic output port 1122 is inclined toward the second housing 12. It may be understood that in the audio system in this embodiment, the speaker unit 2 may be arranged obliquely in various ways. For example, the speaker unit 2 may be bonded to the carrier 1 at an inclination angle so that the speaker unit 2 is arranged obliquely.

In some optional embodiments, the speaker unit 2 may have a diaphragm, and a side of the speaker unit 2 having the diaphragm may be oriented toward the first housing 11. The diaphragm is oriented toward the first housing 11, such that the front chamber 13 may be formed between the speaker unit 2 and an inner wall of the first housing 11.

The speaker unit 2 may also be arranged obliquely in a direction perpendicular to the plane of the carrier 1. By obliquely disposing the speaker unit 2, two beneficial effects are achieved. First, the volume of the front chamber 13 is increased, making the volumes of the front chamber 13 and the back chamber 14 closer to each other while substantially not reducing the sum of the volumes of the front chamber 13 and the back chamber 14, thereby improving the isolation of the audio system. Second, the size of the airflow passage in the front chamber 13 is increased. As shown in Fig. 11, the distance between the speaker unit 2 and the second housing 12 at a position close to the acoustic output port is greater than the distance between the speaker unit 2 and the second housing 12 at a position close to the acoustic vent port, so that the speaker unit 2 is oblique. The inclined plane of the speaker unit 2 can also make the airflow smoother.

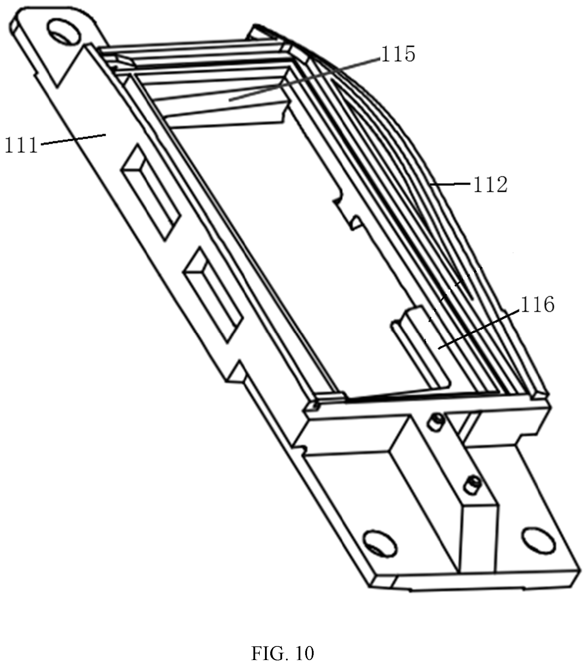

In some optional embodiments of the present disclosure, as shown in Fig. 10, inclined steps 115 may be provided on both sides of the first housing 11 along the length direction of the first side wall 111, and the speaker unit 2 is supported on the inclined steps 115. The inclined step 115 has a flat support surface that can stably support the speaker unit, thereby improving the stability of the assembly structure of the speaker unit.

The speaker unit 2 may be supported on the inclined steps 115 shown in Fig. 10. Since the steps at both ends of the carrier 1 are inclined steps (the inclined steps are located on both sides of the length direction of the first side wall 111), the speaker unit 1 may be placed obliquely in the direction perpendicular to the plane of the carrier, thereby further controlling the volumes of the front chamber and the back chamber to be close to each other while keeping the overall volume of the front chamber and the back chamber unchanged, thus improving the isolation of the audio system. For example, if the speaker unit 1 is not oblique in the direction perpendicular to the plane of the carrier, the volume ratio of the front chamber 13 to the back chamber 14 may be 1:1.2. By obliquely disposing the speaker unit in the direction perpendicular to the plane of the carrier, the volume ratio of the front chamber to the back chamber may be approximately 1.1:1.1. In addition, obliquely placing the speaker unit can also achieve a smoother airflow through the acoustic vent port 111a of the back chamber, and reduce airflow noise. As shown in a cross-sectional view of the audio system in Fig. 11, the oblique placement of the speaker unit can increase the volume of the front chamber, and accordingly, the value of a shown in Fig. 11 increases, thereby making the airflow in the front chamber 13 smoother. For the back chamber 14, the oblique placement of the speaker unit can increase the value of b, thereby making the airflow in the back chamber 14 smoother.

It should be noted that the carrier may also be provided with two non-inclined steps 116. The two non-inclined steps 116 are spaced apart and respectively located at the two ends of the inclined steps 115. The two ends of the speaker unit 2 may be stably supported on the two non-inclined steps 116.

As shown in Fig. 12, some embodiments of the present disclosure provide smart glasses. The smart glasses include: a frame 31, temples 32, and at least one audio system described above. The audio system may be arranged in the temple 32. The carrier of the audio system may be a part of the structure of the temple 32. In a state where the temple is worn on a user's head, the distance between the acoustic output port 1122 and the user's ear is typically less than the distance between the acoustic vent port 111a and the user's ear. It should be noted that the audio system may be arranged at a position indicated by the sign 321 in Fig. 12. The position enables the audio system to be closer to the user's ear canal when the user wears the smart glasses.

A first sound wave generated by the front chamber 13 is emitted through the acoustic output port. The acoustic output port 1122 is at a position close to the ear canal. A second sound wave generated by the back chamber 14 of the speaker is emitted through the acoustic vent port 111a. The acoustic vent port 111a faces away from the ear canal. The second sound wave is out of phase with the first sound wave, e.g., the first sound wave is out of phase with the second sound wave by 180 degrees. In this way, the first sound wave can be heard by the user, and the second sound wave and the first sound wave will cancel out after being superimposed, such that people around the user of the smart glasses cannot hear the sound of the acoustic output port, thereby protecting the privacy of the user of the smart glasses.

Optionally, the temple includes a temple body and an ear-hanging portion. The temple body is connected to the frame. The audio system is arranged between the temple body and the ear-hanging portion. That is, the position 321 where the audio system is arranged may be located between the temple body and the ear-hanging portion.

The position 321 where the audio system is arranged is a part close to the ear canal when the user wears the smart glasses. To facilitate wearing and make the acoustic output port closer to the ear, an area on the audio system near the acoustic output port may be designed as a convex arc-shaped segment, as shown in Fig. 12.

Two sides of the temple along a width direction thereof are respectively provided with thickness end faces, and the two thickness-end faces respectively have a first avoidance hole and a second avoidance hole. When the user wears smart glasses, the first avoidance hole is far from the ear, and the second avoidance hole is close to the ear. The first avoidance hole is in communication with the acoustic vent port 111a, and the second avoidance hole is in communication with the acoustic output port 1122.

In some optional embodiments, the temple is typically elongated, with the acoustic output port 1122 and the acoustic vent port 111a respectively located on the end faces of the two sides of the temple along the width direction thereof. The temple is a flat strip-shaped structure, with the first avoidance hole and the second avoidance hole respectively provided on the end faces of the two sides of the temple along the width direction thereof, such that the first avoidance hole and the second avoidance hole are at different distances from the user's ear canal. Airflows discharged from the first avoidance hole and the second avoidance hole are in opposite phases (e.g., 180 degrees out of phase), and cancel out upon superimposition. As a result, people at a distal end of the smart glasses cannot clearly hear sound from the acoustic output port 1122, thereby achieving the purpose of preventing privacy leakage.

The above description has been made for purposes of illustration and description. In addition, this description is not intended to limit the embodiments of the present disclosure to the forms disclosed herein. Although a plurality of example aspects and embodiments have been discussed above, certain variations, modifications, changes, additions, and sub-combinations thereof would occur to those skilled in the art.

## Claims

1. An audio system, comprising:
a carrier having a first side wall and a second side wall, the carrier being provided with an acoustic vent port and an acoustic output port, the acoustic vent port and the acoustic output port being respectively configured to radiate a first sound wave and a second sound wave outward; and
a speaker unit arranged in the carrier, wherein the carrier and the speaker unit cooperate to form a front chamber and a back chamber, the acoustic vent port is in communication with the back chamber, and the acoustic output port is in communication with the front chamber, an included angle is formed between the speaker unit and the first side wall, and a first end of the speaker unit is close to the first side wall, a second end of the speaker is away from the first side wall, and the first end and the second end are respectively located on two opposite sides of the speaker unit.

2. The audio system according to claim 1, wherein an included angle α formed between the first side wall and a side wall of the speaker unit close to the first side wall is between 3° and 10°.

3. The audio system according to claim 1 or 2, wherein a distance between a first edge of the speaker unit and an inner surface of the carrier is not less than 0.5 mm, the first edge is the edge of the speaker unit that is close to the acoustic vent port and extends along a length direction of the carrier, and a surface where the first edge of the speaker unit is located cooperates with the carrier to form the back acoustic chamber.

4. The audio system according to any one of claims 1 to 3, wherein a distance between a second edge of the speaker unit and an inner surface of the carrier is not less than 0.4 mm, the second edge is the edge of the speaker unit that is close to the acoustic output port and extends along a length direction of the carrier, and a surface where the second edge of the speaker unit is located cooperates with the carrier to form the front acoustic chamber.

5. The audio system according to any one of claims 1 to 4, wherein the acoustic vent port is provided along the first side wall, and the acoustic output port is provided along the second side wall.

6. The audio system according to any one of claims 1 to 5, wherein the first side wall is provided with at least one acoustic vent port, respective acoustic vent ports are sequentially spaced apart along a length direction of the first side wall, and a distance between at least one acoustic vent port and the speaker unit is not less than 1.2 mm.

7. The audio system according to any one of claims 1 to 6, wherein an inner length of the first side wall is 2 to 3 times an effective inner length of the acoustic vent port along a direction of the first side wall;
a length of the speaker unit is 1.5 to 2.5 times an effective inner length of the acoustic vent port along the direction of the first side wall;
the acoustic vent port is provided in the first side wall, and the audio system comprises at least two acoustic vent ports; and
an effective inner length of the acoustic vent port along the direction of the first side wall is a sum of effective inner lengths of the at least two acoustic vent ports along the direction of the first side wall.

8. The audio system according to any one of claims 1 to 7, wherein the carrier has a first housing and a second housing;
the first housing has the first side wall and the second side wall; and
the first housing and the second housing are snap-fitted with each other, the front chamber is formed between the speaker unit and the first housing, and the back chamber is formed between the second housing, the first housing, and the speaker unit.

9. The audio system according to claim 8, wherein the second side wall has a convex arc-shaped segment;
the first housing further has a third side wall that connects the first side wall and the convex arc-shaped segment;
a corner portion is formed between the third side wall and the convex arc-shaped segment; and
a corner of the speaker unit is oriented toward the corner portion.

10. The audio system according to claim 8 or 9, wherein the first side wall and the second side wall are spaced apart and arranged opposite each other;
the first housing further comprises a fourth side wall, which connects the first side wall and the second side wall, the fourth side wall is arranged opposite the third side wall, an enclosure structure is provided in the first housing, and the speaker unit is embedded in and fixed on an inner side of the enclosure structure, the speaker unit is arranged along the third side wall, and the speaker unit is close to the third side wall, and at least one of the two corners of the speaker unit that are away from the convex arc-shaped segment abuts against any one of the second side wall and the fourth side wall.

11. The audio system according to any one of claims 8 to 10, wherein the first housing and the second housing are snap-fitted with each other, the speaker unit divides an internal chamber of the carrier into a main chamber and the front chamber, a partition rib is provided in the carrier, and the two ends of the partition rib are respectively connected to the side walls, the partition rib divides the main chamber into the back chamber and an isolation chamber, the front chamber is formed between the speaker unit and the first housing, the back chamber is formed between the second housing, the first housing, and the speaker unit, the isolation chamber is formed by enclosure of the partition rib and the side walls, the isolation chamber extends along a thickness direction of the carrier, and an extension length of the isolation chamber is greater than a thickness of the speaker unit;
the partition rib includes at least a first partition rib, the first partition rib is located between the third side wall and the speaker unit, and the speaker unit is arranged along the first partition rib, and the speaker unit is close to the first partition rib.

12. The audio system according to any one of claims 1 to 11, wherein the carrier comprises a first housing and a second housing sequentially along a thickness direction thereof;
the first housing has the first side wall and the second side wall, and inclined steps are provided on both sides of the first housing along a length direction of the first side wall, and the speaker unit is supported on the inclined steps;
the speaker unit has a diaphragm, and a side of the speaker unit having the diaphragm is oriented toward the first housing, the front chamber is formed between the speaker unit and the first housing, and a portion of the back chamber is formed between the second housing and the speaker unit; and
a side of the speaker unit close to the acoustic vent port is inclined toward a side away from the second housing, and a side of the speaker unit close to the acoustic output port is inclined toward the second housing.

13. Smart glasses, comprising:
a frame and temples; and
at least one audio system according to any one of claims 1 to 12, wherein the audio system is arranged in the temple.

14. The smart glasses according to claim 13, wherein the speaker unit is arranged in the temple of the smart glasses, such that the speaker unit is close to a position of a user's ear canal when the user wears the smart glasses; an area near the acoustic output port of the carrier is designed as a convex arc-shaped segment, such that the acoustic output port is close to the ear; a tail portion of the temple has an inclined segment that extends downward; and when the user wears the smart glasses, the convex arc-shaped segment and the inclined segment are respectively located on two sides of the user's ear, such that the convex arc-shaped segment and the inclined segment cooperate with each other to avoid the user's ear and are positionally limited by the user's ear.

15. The smart glasses according to claim 14, wherein the carrier is the temple of the smart glasses, the speaker unit is provided in the temple, and the carrier has the first side wall with the acoustic vent port and the second side wall with the acoustic output port.
